# EUROPEAN PATENT APPLICATION

(11) **EP 3 514 605 A1**
(43) Date of publication of application: **24.07.2019**
(21) Application number: 19152321.6
(22) Date of filing: 17.01.2019
(51) Int. Cl.: G02B 27/01

(54) **HEAD-UP DISPLAY SYSTEM**

(30) Priority: 18.01.2018 US 201815874237
(71) Applicant: Visteon Global Technologies, Inc., Van Buren Township, MI 48111-5711 (US)
(72) Inventor: HENON, Fabrice, 95800 CERGY (FR); RENAUDIN, David, 95450 US (FR); ACAS, Thierry, 60240 Fresne Leguillon (FR)
(74) Representative: MERH-IP Matias Erny Reichl Hoffmann Patentanwälte PartG mbB

(57) **Abstract**

A head-up display system for a vehicle including a picture generating unit for projecting information. A mirror is rotatably connected to a housing for reflecting the information from the picture generating unit toward a combiner panel. A first mirror leg extends from the mirror along a first axis and a second mirror leg extends from the mirror opposite the first mirror leg along a second axis. A first ball joint assembly pivotably connects the first mirror leg to the housing and a second ball joint assembly pivotably connects the second mirror leg to the housing, each for preventing misalignment of the mirror. At least one of the first and second mirror legs are translatable along the first or second axis relative to the housing. A first bearing is rotatably connects the first leg to the housing and a second bearing rotatably connects the second leg to the housing.

## Description

### BACKGROUND

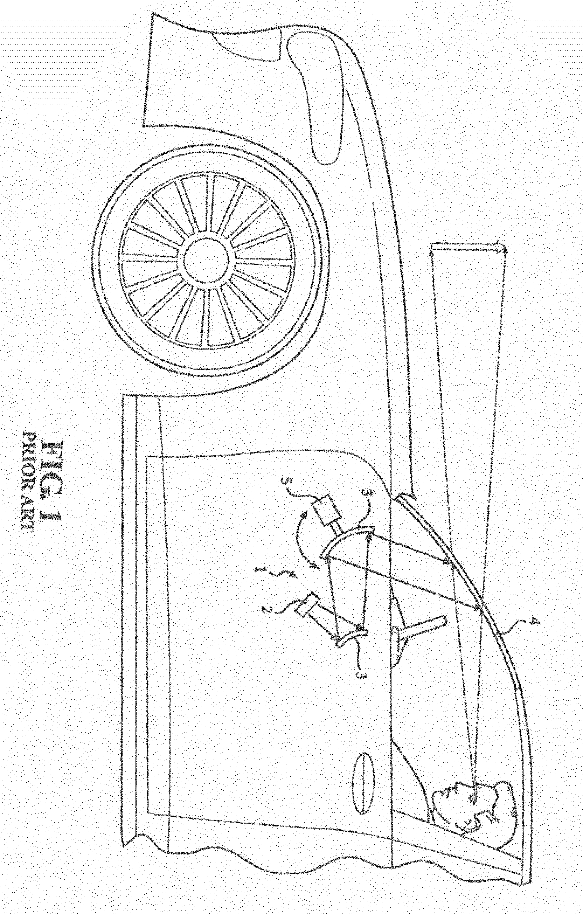

Head-up display or HUD systems are known for presenting information to an operator of a vehicle without requiring the operator to look away from their usual viewpoint. As best illustrated in FIG. 1, a typical HUD system includes a picture generating unit 2, such as a projector, that projects a virtual image onto one or more mirrors 3 which reflect the virtual image onto a transparent combiner panel 4, such as windshield, of the vehicle. The mirrors are often rotatable to various angles to project the virtual image at different locations on the combiner panel 4 to accommodate different operators or prevent sun damage to the picture generating unit 2.

A known issue with conventional HUD systems is that vibrations, especially at resonant frequencies of the mirror and its supporting components, can cause the mirror to be moved out of a desired position. Additionally, thermal expansion of the mirror and supporting components is known to interfere with positioning the mirror.

### SUMMARY

According to an aspect of the disclosure, a head-up display system for a vehicle is provided. The head-up display system includes a picture generating unit for projecting information. The head-up display system also includes a housing for being connected with a dashboard of the vehicle. A mirror is rotatably connected to the housing for reflecting the information from the picture generating unit toward a combiner panel such that the information may be viewed by an occupant of the vehicle. A first mirror leg extends from the mirror along a first axis and a second mirror leg extends from the mirror opposite the first mirror leg along a second axis. A first ball joint assembly pivotably connects the first mirror leg to the housing and a second ball joint assembly pivotably connects the second mirror leg to the housing.

Due to the first and second ball joint assemblies, the first and second mirror legs may be positioned at various orientations and at various heights relative to the housing while remaining fixed at a desired location even during rotation of the mirror. This provides flexibility in packaging the system and allows for fine tuning a range of mirror orientations.

According to another aspect of the disclosure, another head-up display system for a vehicle is provided. The head-up display system includes a picture generating unit for projecting information. The head-up display system also includes a housing for being connected with a dashboard of the vehicle. A mirror is rotatably connected to the housing for reflecting the information from the picture generating unit toward a combiner panel such that the information may be viewed by an occupant of the vehicle. A first mirror leg extends from the mirror along a first axis and a second mirror leg extends from the mirror opposite the first mirror leg along a second axis. The first and second mirror legs are rotatably coupled with the housing. At least one of the first and second mirror legs are translatable along the first or second axis relative to the housing.

Due to the ability to translate the first or second mirror leg relative to the housing, thermal expansion the mirror and mirror legs is accommodated, thus preventing misalignment of the first and second mirror legs during rotation of the mirror, and preventing component wear issues.

According to another aspect of the disclosure, another head-up display system for a vehicle is provided. The head-up display system includes a picture generating unit for projecting information. The head-up display system also includes a housing for being connected with a dashboard of the vehicle. A mirror is rotatably connected to the housing for reflecting the information from the picture generating unit toward a combiner panel such that the information may be viewed by an occupant of the vehicle. A first mirror leg extends from the mirror along a first axis and a second mirror leg extends from the mirror opposite the first mirror leg along a second axis. A first bearing rotatably connects the first leg to the housing and a second bearing rotatably connects the second leg to the housing.

Due to the first and second bearings, the mirror may easily be rotated to desired positions with a low friction, thereby allowing the use of fast and accurate actuators to control rotation of the mirror.

Additional features and advantages of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed. Other features and aspects will be apparent from the following detailed description, the drawings, and the claims.

### DESCRIPTION OF THE DRAWINGS

The detailed description refers to the following drawings, in which like numerals refer to like items, and in which:
FIG. 1 is a side schematic view of a vehicle including a conventional head-up display system according to an aspect of the disclosure;
FIG. 2 is a perspective view of a housing of an example embodiment of a head-up display system;
FIG. 3 is a perspective view of the example embodiment of a head-up display system with an upper shell of the housing removed;
FIG. 4 is a perspective view of a mirror and first and second ball joint assemblies of the example embodiment of a head-up display system;
FIG. 5 is a perspective cross-sectional view of a first ball joint assembly of the example embodiment of a head-up display system;
FIG. 6 is a perspective cross-sectional view of the first ball joint assembly of the example embodiment of a head-up display system, with a first mirror leg received by the first ball joint assembly;
FIG. 7 is a perspective view of the first ball joint assembly of the example embodiment of a head-up display system;
FIG. 8 is a perspective exploded view of the first ball joint assembly of the example embodiment of a head-up display system;
FIG. 9 is a perspective cutaway view of a second ball joint assembly of the example embodiment of a head-up display system;
FIG. 10 is a perspective cutaway view of the second ball joint assembly of the example embodiment of a head-up display system, with a second mirror leg received by the second ball joint assembly; and
FIG. 11 is a perspective view of the second ball joint assembly of the example embodiment of a head-up display system.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g., XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

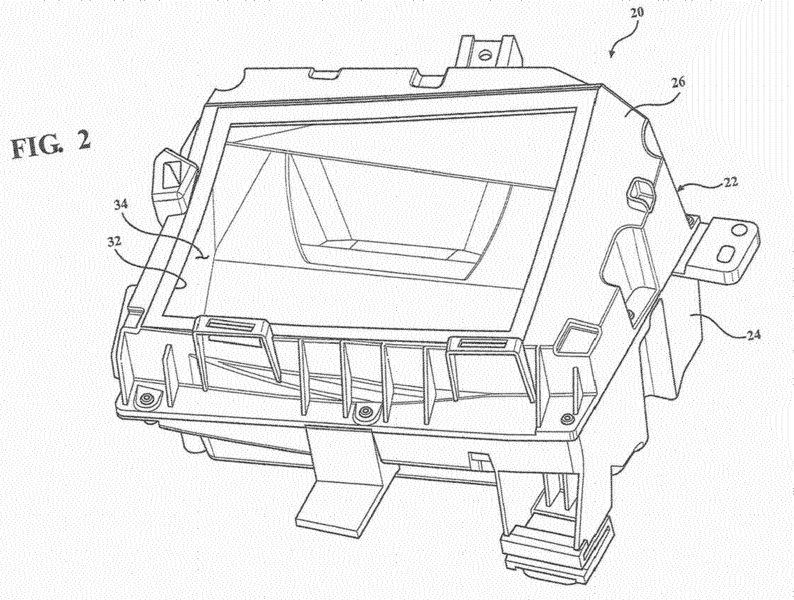

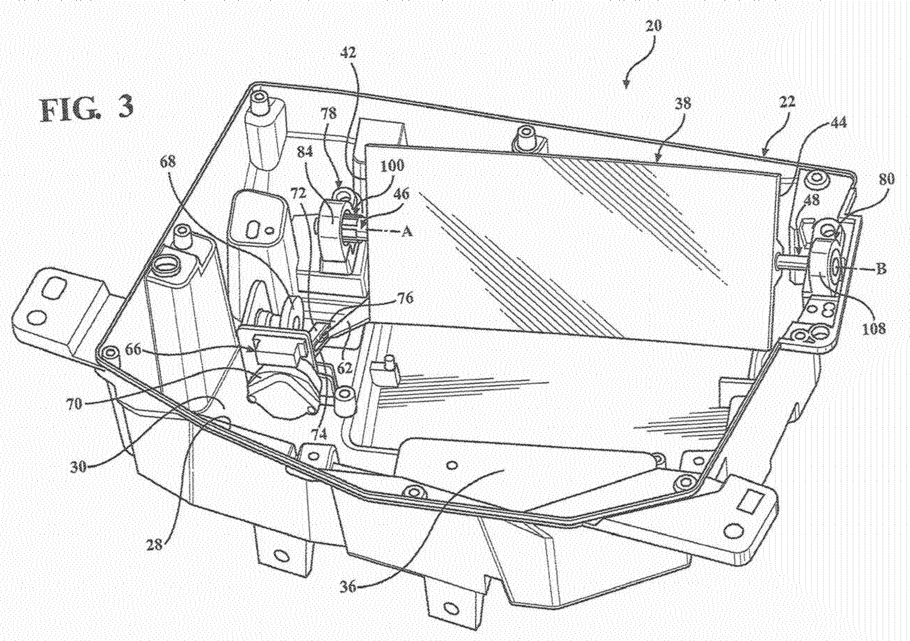

Referring to the Figures, wherein like numerals indicate corresponding parts throughout the several views, a head-up display system 20 for a vehicle is generally shown. As best illustrated in FIG. 2, the head-up display system 20 includes a housing 22 for being connected with a dashboard of the vehicle. The housing 22 has a lower shell 24 and an upper shell 26 that are removably attached to one another and define a cavity 28 therebetween. As best shown in FIG. 3, the lower shell 24 has a base 30 in the cavity 28. With reference to FIG. 2, the upper shell 26 defines an opening 32. A window 34 is connected to the upper shell 26 and extends across the opening 32, thus sealing the cavity 28 at the opening 32.

As best shown in FIG. 3, a picture generating unit 36 is connected to the base 30 for projecting information. It should be appreciated that the picture generating unit 36 could be positioned at other locations within the vehicle inside or outside of the housing 22.

An optical mirror 38 is rotatably and pivotably connected to the base 30 for reflecting the information from the picture generating unit 36 through the window 34 of the housing 22 and toward a combiner panel. It should be appreciated that the combiner panel may be a windshield or other semi-transparent unit.

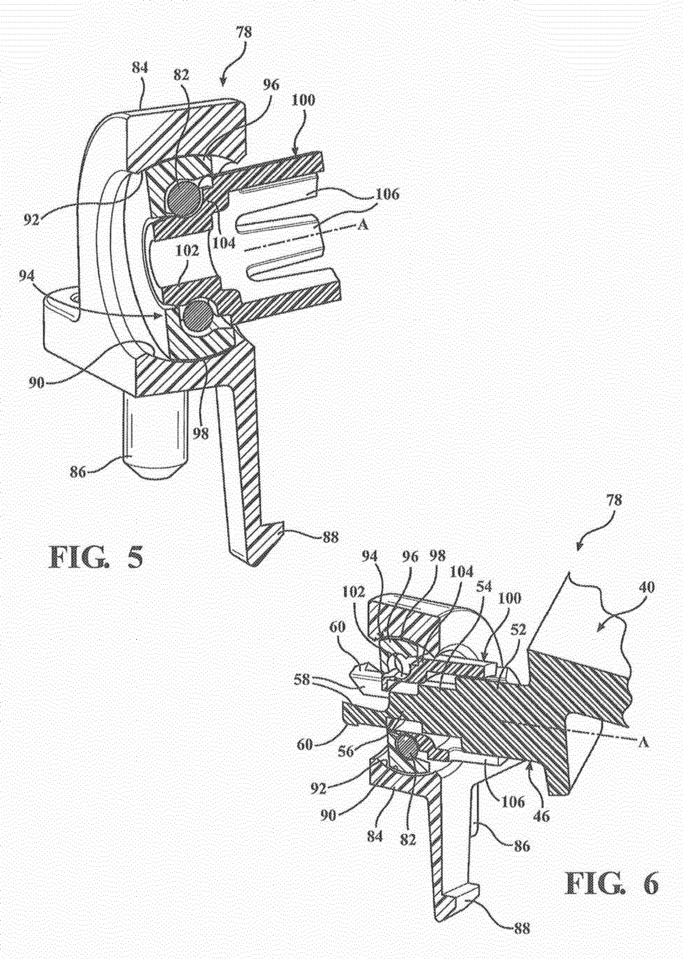

The mirror 40 extends between a first edge 42 and a second edge 44. A first mirror leg 46 extends from the first edge 42 along a first axis A. A second mirror leg 48 extends from the second mirror edge 50 along a second axis B. As best illustrated in FIG. 6, the first mirror leg 46 includes a first cylindrical portion 52 adjacent the mirror 40, a second cylindrical portion 54 extending from the first cylindrical portion 52, and a third cylindrical portion 56 extending from the second cylindrical portion 54. The first cylindrical portion 52 has a larger diameter than the second cylindrical portion 54, and the second cylindrical portion 54 has a larger diameter than the third cylindrical portion 56. The first mirror leg 46 further includes a pair of limiting legs 58 that extend parallel to the first axis A from the third cylindrical portion 56. The limiting legs 58 each terminate at a limiting tab 60 that extends radially outwardly.

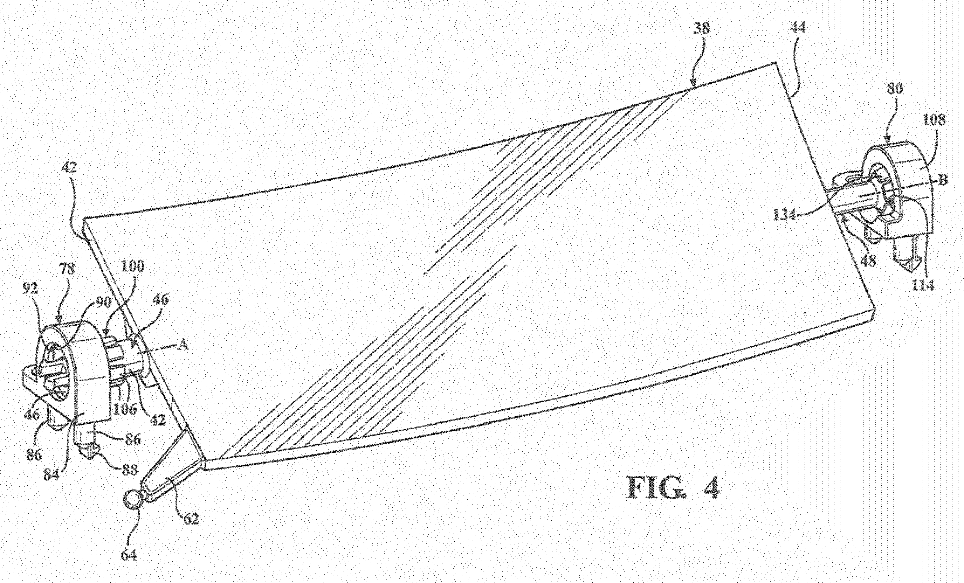

As best shown in FIGs. 3-4, a movement arm 62 extends from the first edge 42 of the mirror 40 in spaced relationship with the first mirror leg 46. The movement arm 62 terminates at a pivot ball 64. As best shown in FIG. 3, a tilt actuator assembly 66 is connected to the housing 22 in the cavity 28 adjacent to the optical mirror 38 and coupled with the pivot ball 64 of the movement arm 62 for moving the movement arm 62 to provide rotating movement of the mirror 40 about the first and second axes A, B. The tilt actuator assembly 66 includes a cam wheel 68 that is rotatably connected to a motor 70. The tilt actuator assembly 66 also includes a lever 72 that extends between a first end 74 and a second end 76. The first end 74 of the lever 72 is pivotably connected to the cam wheel 68, and the second end 76 of the lever 72 is pivotably connected to the pivot ball 64 of the movement arm 62, thus providing rotation of the mirror 40 about the first and second axes A, B in response to rotation of the cam wheel 68. It should be appreciated that other types of actuator assemblies may be utilized to provide rotating and pivoting movement of the mirror 40.

A first ball joint assembly 78 pivotably connects the first mirror leg 46 to the housing 22. Likewise, a second ball joint assembly 80 pivotably connects the second mirror leg 48 to the housing 22. It should be appreciated that the first and second ball joint assemblies 78 allow the mirror 40 to remain at a desired orientation during rotation of the mirror 40, even with the first and second mirror legs 46, 48 positioned such that they are not coplanar with one another. For example, as illustrated in FIG. 3, the first mirror leg 46 may be positioned slightly lower than the second mirror leg 48 but rotation of the mirror 40 about the first and second axes A, B is still possible due to the ball joint assemblies 78, 80.

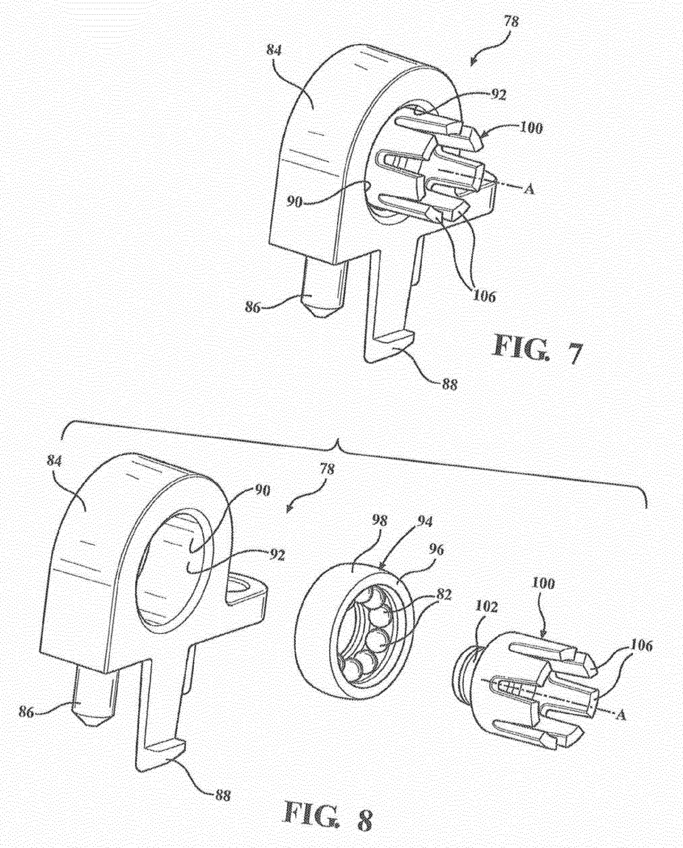

As best shown in FIGs. 5-8, the first ball joint assembly 78 includes a first body 84 that is detachably connected to the base 30. More particularly, the first body 84 includes a pair of first alignment cylinders 86 that extend in parallel relationship with one another for being received by orifices of the base 30. The first body 84 further includes a first flexible tab 88 that extends generally parallel to the first alignment cylinders 86 for being detachably connected to an orifice defined by the base 30. The first body 84 further defines a first channel 90 that extends generally perpendicularly to the first alignment cylinders 86. The first channel 90 is defined by a first inner wall 92 that has a concave shaped cross-section. The first ball joint assembly 78 further includes a first bearing 94 that is fixedly received by the first channel 90 of the first body 84 and pivotable and rotatable about the first axis A. The first bearing 94 includes a first outer ring 96 and a plurality of first balls 82 positioned against an inner circumference of the first outer ring 96. The first outer ring 96 has a first outer bearing wall 98 that has a concave shape that is pivotably received by the first inner wall 92 of the first channel 90. The first outer bearing wall 98 is snugly fitted against the first inner wall 92 such that there is a high coefficient of friction present between the first outer bearing wall 98 and the first inner wall 92 in order to inhibit pivoting movement of the mirror 40 during ordinary vehicle vibrations once the system 20 is assembled and the mirror 40 is correctly aligned. This high coefficient of friction helps to ensure that the first resonance frequency of the system 20 is relatively high, e.g., above 100 Hz.

The first ball joint assembly 78 further includes a first mirror interface member 100 that is coupled with the first bearing 94. The first mirror interface member 100 includes a tube 102 that extends along the first axis A and is received by, and connected to the first bearing 94. As best shown in FIG. 6, the tube 102 of the first mirror interface member 100 slideably receives the first mirror leg 46. The first mirror interface member 100 further includes a first shoulder 104 that extends radially outwardly from the tube 102 in abutting relationship with the first balls 82 to provide rotation of the first mirror interface member 100 about the first axis A. Accordingly, the first mirror interface member 100 is able to rotate within the first bearing 94 with very little friction deterring rotation thereof.

One or more springs may be introduced between the first balls 82 and the first shoulder 104 to remove any gaps, and maintain a high coefficient of friction between the first outer bearing wall 98 and the first inner wall 92. This further helps to ensure that the first resonance frequency of the system 20 is relatively high.

The first mirror interface member 100 further includes a plurality of first connecting fins 106 that are flexibly connected to the shoulder and extend generally parallel to the first axis A. The first connecting fins 106 are positioned in circumferentially spaced relationship with one another. The first mirror leg 46 is received by the connecting fins 106 and moveable along the first axis A relative to the connecting fins 106. Axial movement of the first mirror leg 46 is limited by the first cylindrical portion 52 and the limiting tabs 60 of the first limiting legs 58. It should further be appreciated that the first connecting fins 106 allow for the translation of the first mirror leg 46 along the first axis while also allowing diameter expansion of the first mirror interface member 100 when the temperature arises. The first connecting fins 106 also provide for preloading on the first mirror axis A and easy assembly of the system 20, as the first mirror leg 46 may easily be snapped between the first connecting fins 106 during assembly.

It should also be appreciated that the arrangement of the first ball joint assembly 78 including a first bearing 94 advantageously allows the mirror 40 to easily rotate while the first and second mirror legs 46, 68 are held at a desired angle relative to the housing 22. It should further be appreciated that the first bearing 94 provides easy rotation of the mirror 40 with low friction, thereby allowing the use of fast and accurate actuators to control rotation of the mirror 40.

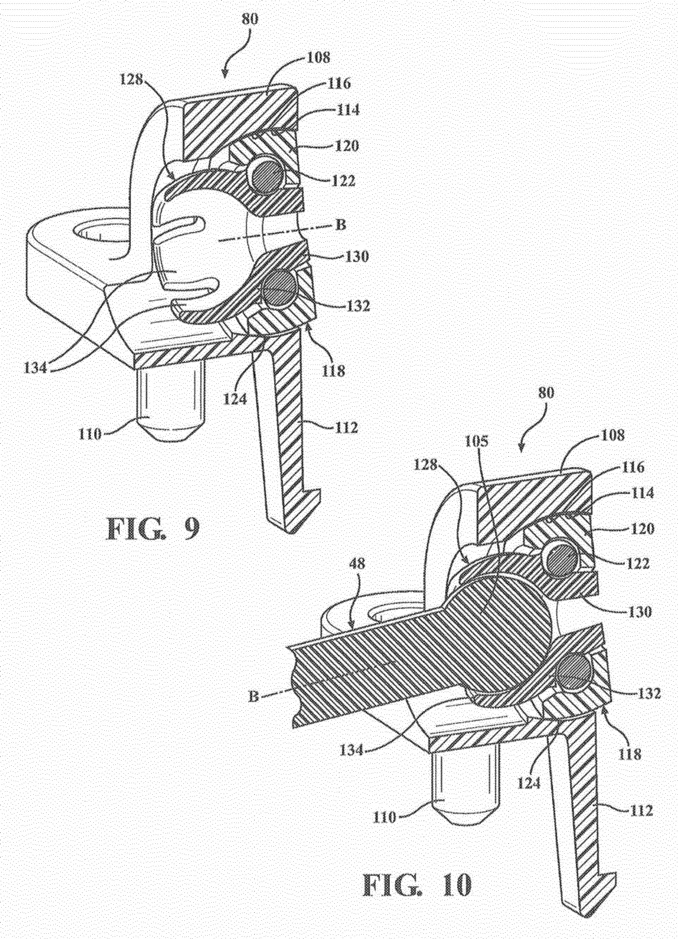

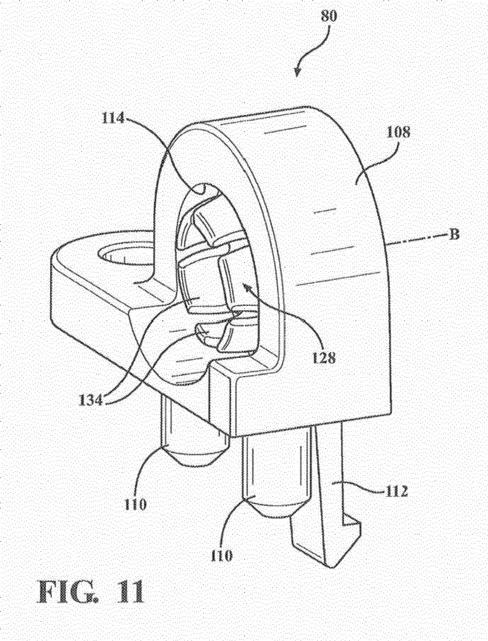

As best shown in FIGs. 9-11, the second ball joint assembly 80 includes a second body 108 that is detachably connected to the base 30 of the housing 22. More particularly, the second body 108 includes a pair of second alignment cylinders 110 that extend in parallel relationship with one another for being received by orifices in the base 30 of the housing 22. The second body 108 further includes a second flexible tab 112 that extends generally parallel to the second alignment cylinders 110 for being detachably connected to an orifice defined by the base 30 of the housing 22. The second body 108 further defines a second channel 114 that extends generally perpendicularly to the second alignment cylinders 110. The second channel 114 is defined by a second inner wall 116 that has a portion with a concave shape.

The second ball joint assembly 80 further includes a second bearing 118 that is fixedly received by the second channel 114 of the second body 108 and pivotable and rotatable about the second axis B. The second bearing 118 includes a second outer ring 120 and a plurality of second balls 122 positioned against an inner circumference of the second outer ring 120. The second outer ring 120 has a second outer bearing wall 124 that has a concave shape that is pivotably received by the second inner wall 116 of the second channel 114. The second outer bearing wall 124 is fitted snugly against the second inner wall 116 such that there is a high coefficient of friction between the second outer bearing wall 124 and the second inner wall 116 in order to inhibit pivoting movement of the mirror 40 from pivoting during normal vehicle operations once the system 20 is assembled and the mirror 40 is correctly aligned. This further helps to ensure that the first resonance frequency of the system 20 is relatively high. It should also be appreciated that the arrangement of the second ball joint assembly 80 including the second bearing 118 advantageously allows the mirror 40 to easily rotate while the first and second mirror legs 46, 68 are held at a desired angle relative to the housing 22.

The second ball joint assembly 80 further includes a second mirror interface member 128 that is coupled with the second bearing 118. The second mirror interface member 128 includes a second tube 130 that extends along the second axis B and is received by and connected to the second bearing 118. The second mirror interface member 128 further includes a second shoulder 132 that extends radially outwardly from the second tube 130. The second balls 122 abut the second shoulder 132 to provide rotation of the second mirror interface member 128 relative to the second body 108. One or more springs may be introduced between the second balls 128 and the second shoulder 132 to remove any gaps, and maintain a high friction between the second outer bearing wall 124 and the second inner wall 116. This further helps to ensure that the first resonance frequency of the system 20 is relatively high. The second mirror interface member 128 further includes a plurality of second connecting fins 134 flexibly connected to the second shoulder 132 and extending in an arc shape away from the second shoulder 132 in circumferentially spaced relationship with one another. A second ball 105 formed at an end of the second mirror leg 48 is received by the second connecting fins 134 and pivotable within the second connecting fins 134. The second connecting fins 134 act as a ball joint allowing pivoting of the second mirror leg 48 while inhibiting translation of the second mirror leg 48. The second connecting fins 134 provide for preloading on the second mirror axis B and easy assembly of the system 20, as the second mirror leg 48 may easily be snapped between the second connecting fins 134 during assembly.

As a person skilled in the art will readily appreciate, the above description is meant as an illustration of implementation of the principles this invention. This description is not intended to limit the scope or application of this invention in that the invention is susceptible to modification, variation and change, without departing from spirit of this invention, as defined in the following claims.

## Claims

1. A head-up display system for a vehicle including:
a picture generating unit for projecting information;
a housing for being connected with a dashboard of the vehicle;
a mirror rotatably connected to the housing for reflecting the information from the picture generating unit toward a combiner panel such that the information may be viewed by an occupant of the vehicle;
a first mirror leg extending from the mirror along a first axis and a second mirror leg extending from the mirror opposite the first mirror leg along a second axis; and
a first ball joint assembly pivotably connecting the first mirror leg to the housing and a second ball joint assembly pivotably connecting the second mirror leg to the housing.

2. The head-up display system as set forth in claim 1 wherein at least one of
the first and second mirror legs is translatable along the first or second axis relative to the first and second ball joint assemblies and/or.
wherein at least one of the first and second ball joint assemblies includes a body connected to the housing, wherein a ball bearing is received by the body, and wherein a mirror interface member is rotatably received by the ball bearing and is connected to the first or second mirror leg to provide rotation of the first or second mirror leg relative to the body.

3. The head-up display system as set forth in claim 1 or 2 wherein the first ball joint assembly includes a first body coupled with the housing and defining a first channel having a convex shape, wherein a first bearing having a first outer wall having a concave shape is received by the first channel with a high coefficient of friction present between the first channel and the first outer wall, and wherein the first mirror leg is coupled with the first bearing to provide the pivotable connection of the first mirror leg to the housing and/or
wherein the first ball joint assembly further includes a first mirror interface member coupled with the first bearing, wherein the first mirror interface member includes a first tube extending along the first axis and received by the first bearing, wherein the first mirror interface member further includes a shoulder extending radially outwardly from the tube, wherein the first mirror interface further includes a plurality of connecting fins flexibly connected to the shoulder and extending generally parallel to the first axis and positioned in circumferentially spaced relationship with one another, and wherein the first mirror leg is received by the connecting fins and the first tube and is moveable along the first axis relative to the first mirror interface member.

4. The head-up display system as set forth in claim 3 wherein the first mirror leg includes at least one limiting tab extending radially outwardly, wherein the first mirror interface member is positioned axially between the at least one limiting tab and the mirror, and wherein the movement of the first mirror leg along the first axis is limited by the at least one limiting tab and the mirror.

5. The head-up display system as set forth in claim 4 wherein the first mirror leg includes a first cylindrical portion and a second cylindrical portion and a third cylindrical portion, wherein the first cylindrical portion having a larger diameter than the second cylindrical portion an is positioned adjacent the mirror, wherein the second cylindrical portion has a larger diameter than the third cylindrical portion, wherein a pair of limiting legs extend in parallel relationship with one another from the third cylindrical portion, wherein the at least one limiting tab includes a pair of limiting tabs each extending radially outwardly from one of the limiting legs, and wherein the movement of the first mirror leg along the first axis is limited by the second cylindrical portion and the limiting tabs of the first limiting legs.

6. The head-up display system as set forth in one of claims 1-5 wherein the second ball joint assembly includes a second body defining a second channel having a concave shape along a second axis, and wherein the second ball joint assembly further includes a second bearing having an outer bearing wall having a concave shape pivotably received by the second channel of the second body.

7. The head-up display system as set forth in any of claims 1-6 wherein the second ball joint assembly further includes a second mirror interface member coupled with the second bearing and with the second mirror leg, wherein the second mirror interface member includes a second tube extending along a second axis and received by and connected to the second bearing, wherein a second shoulder extends radially outwardly from the second tube, wherein the second mirror interface member further includes a plurality of second connecting fins flexibly connected to the second shoulder and extending in an arc shape away from the second shoulder and spaced circumferentially relative to one another, and wherein the second mirror leg terminates at a second ball received by the second connecting fins.

8. A head-up display system for a vehicle including;
a picture generating unit for projecting information;
a housing for being connected with a dashboard of the vehicle;
a mirror rotatably connected to the housing for reflecting the information from the picture generating unit toward a combiner panel such that the information may be viewed by an occupant of the vehicle;
a first mirror leg extending from the mirror along a first axis and a second mirror leg extending from the mirror opposite the first mirror leg along a second axis, wherein the first and second mirror legs are rotatably coupled with the housing; and
at least one of the first and second mirror legs being translatable along the first or second axis relative to the housing.

9. The head-up display system as set forth in claim 8 wherein a first ball joint assembly pivotably connects the first mirror leg to the housing and a second ball joint assembly pivotably connects the second mirror leg to the housing, and/or
at least one of the first and second ball joint assemblies includes a body connected to the housing, a ball bearing is received by the body, and a mirror interface member is rotatably received by the ball bearing and connected to the first or second mirror leg to provide rotation of the first or second mirror leg relative to the body.

10. The head-up display system as set forth in claim 9 wherein the first ball joint assembly includes a first body coupled with the housing and defining a first channel having a convex shape, wherein a first bearing having a first outer wall having a concave shape is pivotably received by the first channel, and wherein the first mirror leg is coupled with the first bearing to provide the pivotable connection of the first mirror leg to the housing and/or
wherein the first ball joint assembly further includes a first mirror interface member coupled with the first bearing, wherein the first mirror interface member includes a tube extending along the second axis and received by and coupled with the first bearing, wherein the first mirror interface member further includes a shoulder extending radially outwardly from the tube, wherein the first mirror interface further includes a plurality of connecting fins flexibly connected to the shoulder and extending generally parallel to the second axis and positioned in circumferentially spaced relationship with one another, and wherein the first mirror leg is received by the connecting fins and the tube and is moveable along the axis relative to the connecting fins.

11. The head-up display system as set forth in claim 10 wherein the first mirror leg includes at least one limiting tab extending radially outwardly, wherein the first mirror interface member is positioned axially between the at least one limiting tab and the mirror, and wherein the movement of the first mirror leg along the first axis is limited by the at least one limiting tab and the mirror.

12. The head-up display system as set forth in claim 11 wherein the first mirror leg includes a first cylindrical portion and a second cylindrical portion and a third cylindrical portion, wherein the first cylindrical portion has a larger diameter than the second cylindrical portion, wherein the second cylindrical portion has a larger diameter than the third cylindrical portion, wherein a pair of limiting legs extend in parallel relationship with one another from the third cylindrical portion, wherein the at least one limiting tab includes a pair of limiting tabs each extending radially outwardly from one of the limiting tabs, and wherein the movement of the first mirror leg along the first axis is limited by the second cylindrical portion and the limiting tabs of the first limiting legs.

13. A head-up display system for a vehicle including:
a picture generating unit for projecting information;
a housing for being connected with a dashboard of the vehicle;
a mirror rotatably connected to the housing for reflecting the information from the picture generating unit toward a combiner panel such that the information may be viewed by an occupant of the vehicle;
a first mirror leg extending from the mirror along a first axis and a second mirror leg extending from the mirror opposite the first mirror leg along a second axis; and
a first bearing rotatably connecting the first leg to the housing and a second bearing rotatably connecting the second leg to the housing.

14. The head-up display system as set forth in claim 13 further including a first ball joint assembly pivotably connecting the first mirror leg to the housing and a second ball joint assembly pivotably connecting the second mirror leg to the housing, wherein the first ball joint assembly includes the first bearing and wherein the second ball joint assembly includes the second bearing, and/or
wherein at least one of the first and second mirror legs is translatable along the first or second axis relative to the first and second ball joint assemblies.

15. The head-up display as set forth in claim 14 wherein the first ball joint assembly includes a first body connected to the housing and defines a channel having a concave shape, wherein a ball bearing having an outer surface having a convex shape is received by the channel of the body, and wherein a mirror interface member is rotatably received by the first ball bearing and connected to the first or second mirror leg to provide rotation of the first mirror leg relative to the first body about the first axis.
